# EUROPÄISCHE PATENTSCHRIFT

(11) **EP 1 119 950 B1**
(45) Veröffentlichungstag und Bekanntmachung des Hinweises auf die Patenterteilung: **20.04.2005**
(21) Anmeldenummer: 99970253.3
(22) Anmeldetag: 01.10.1999
(51) Int. Cl.: H04L 12/56, H04Q 11/04

(54) **VERFAHREN ZUM VERBINDUNGSAUFBAU FÜR EIN KOMMUNIKATIONSNETZ**
METHOD FOR SETTING UP A COMMUNICATION LINK IN A TELECOMMUNICATION NETWORK
PROCEDE PERMETTANT D'ETABLIR UNE COMMUNICATION DANS UN RESEAU DE TELECOMMUNICATION

(30) Priorität: 05.10.1998 DE 19845753
(43) Veröffentlichungstag der Anmeldung: 01.08.2001
(73) Patentinhaber: SIEMENS AKTIENGESELLSCHAFT, 80333 München (DE)
(72) Erfinder: HUMMEL, Heinrich, D-85532 Günding (DE)
(86) Internationale Anmeldenummer: PCT/DE1999/003179
(87) Internationale Veröffentlichungsnummer: WO 2000/021328

(56) Entgegenhaltungen:
- WO-A-98/34415
- US-A- 5 649 108

## Beschreibung

Die Erfindung betrifft ein Verfahren zum Verbindungsaufbau für ein Kommunikationsnetz mit einer Vielzahl von über Linkleitungen vernetzten Netzknoten gemäß dem Oberbegriff des Patentanspruchs 1.

Zur schellen Übermittlung von Datenpaketen über ein Kommunikationsnetz werden gegenwärtig verschiedene Verfahren erprobt, die sich in verbindungslose und verbindungsorientierte Übertragungsverfahren einteilen lassen.

Als verbindungsloses Übertragungsverfahren, mit dem eine Beschleunigung der auf dem Internet-Protokoll (IP) basierenden Übertragung von sogenannten IP-Datenpaketen erreicht werden soll, wird das sogenannte MPLS-Verfahren (MPLS = multi protocol label switching) erprobt. Im Rahmen dieses Verfahrens sind sogenannte Label-Switching-Router (LSR) vorgesehen, die IP-Datenpakete mit hoher Geschwindigkeit entlang eines aus Label-Switching-Routern bestehenden Leitweges übertragen können. Ein herkömmlicher, auf dem Internet-Protokoll basierender Router muß eine Ziel-IP-Adresse eines empfangenen IP-Datenpakets mit Einträgen seiner Routing-Tabelle vergleichen, um über einen sogenannten longest-match diejenige Linkleitung zu bestimmen, über die das IP-Datenpaket weiterzuleiten ist. Ein Label-Switching-Router hingegen empfängt das IP-Datenpaket zusammen mit einem vorangestellten Kennsatz (Label) und benutzt diesen Kennsatz als Tabellenindex, um einer Tabelle die Information zur Identifizierung der Linkleitung zur Weiterleiten des IP-Datenpakets sowie einen neuen Kennsatz zu entnehmen, der anstelle des empfangenen Kennsatzes zusammen mit dem IP-Datenpaket weitergeleitet wird. Auf diese Weise können IP-Datenpakete wesentlich schneller weiterübermittelt werden.

Bevor Nutzdaten übermittelt werden können, sind von den Label-Switching-Routern mögliche Leitwege und diese Leitwege beschreibende Folgen von Kennsätzen zu bestimmen. Ein Verfahren zur Leitwegbestimmung ist z.B. aus der Druckschrift US-A-5 649 108 bekannt. Die Leitwege werden dabei so bestimmt, daß sie sich nach Möglichkeit baumartig vereinen, um auf diese Weise Kennsätze zu sparen. Eine solcher Leitweg wird in diesem Zusammenhang häufig auch als Multipoint-to-Point-tree (MPT) bezeichnet. Ein solcher MPT hat genau eine Wurzel, d.h. einen Zielnetzknoten, an dem Endgeräte mit IP-Adressen aus dem jeweiligen Ziel-IP-Adressbereich angeschlossen sind. Häufig ist es zweckmäßig, wenn mehrere MPT zu demselben Zielnetzknoten hinführen und dabei gegebenenfalls unterschiedliche Wege benutzen. Solche mehrfachen MPT können jeweils für unterschiedliche Übertragungsparameter, wie z.B. sog. QoS-Attribute (Quality of Service), gebildet werden.

Beim MPLS-Verfahren bleibt allerdings das Problem bestehen, daß von einem jeweiligen Ursprungs-Label-Switching-Router der jeweils erste Kennsatz auf herkömmliche, aufwendige Weise zu bestimmen ist, um ein zu übermittelndes IP-Datenpaket über die richtige Ursprungs-Linkleitung zu senden. Dies ist besonders dann aufwendig, wenn spezifische Leitwege für verschiedene Übertragungsparameter bzw. Attribute zu berücksichtigen sind.

Verbindungsorientierte Ubertragungsverfahren für Datenpakete haben gegenüber der vorstehend beschriebenen, verbindungslosen Datenübertragung über Label-Switching-Router den Vorteil, daß verschiedene Übertragungsparameter, wie z.B. die bereitzustellende Ubertragungsbandbreite oder eine maximal zulässige Übertragungsdauer von Datenpaketen, einer aufzubauenden Verbindung durch eine vorab zu übermittelnde Verbindungsaufbaumeldung für die aufzubauende Verbindung festgelegt werden können. In der Verbindungsaufbaumeldung, die häufig auch als Setup-Meldung bezeichnet wird, sind zu diesem Zweck in der Regel verschiedene Verbindungsparameter enthaltende Datenfelder vorgesehen, die in den die Verbindungsaufbaumeldung empfangenden Netzknoten ausgewertet werden. Die durch die Verbindungsaufbaumeldung festgelegten Übertragungsparameter gelten für alle im Rahmen der aufgebauten Verbindung zu übertragenden Datenpakete und müssen somit nicht bei jedem einzelnen dieser Datenpakete angegeben werden.

Unter den verbindungsorientierten Übertragungsverfahren gewinnt die ATM-Technologie (Asynchronous Transfer Mode) zunehmend an Bedeutung. Mittels der ATM-Technologie können Datenpaketströme in sogenannten geschalteten virtuellen Verbindungen so schnell wie beim MPLS-Verfahren übertragen werden. Jedoch dauert der Aufbau einer geschalteten virtuellen Verbindung bisher noch verhältnismäßig lange. Geschaltete virtuelle Verbindungen werden häufig auch mit der Abkürzung SVC des englischsprachigen Ausdrucks "Switched Virtual Connection" bezeichnet.

Gegenwärtig wird ein Verfahren zum Aufbau von ATM-Verbindungen diskutiert, bei dem als Verbindungsaufbaumeldung eine sogenannte µ-Setup-Meldung von der Größe einer einzigen ATM-Zelle durch das ATM-Netz übertragen wird, siehe auch die Druckschrift WO 98/34415. Dieses Verfahren erlaubt eine wesentlich schnellere Übermittlung der Verbindungsaufbaumeldung als das bisher übliche Verfahren zum Aufbau einer ATM-Verbindung. Die Übertragung der Verbindungsaufbaumeldung erfolgt nach dem sog. Hop-by-Hop-Prinzip; d.h. jeder die Verbindungsaufbaumeldung empfangende ATM-Netzknoten bestimmt selbst diejenige Linkleitung, über die die ATM-Zelle weiterzuleiten ist. Als Folge der Hop-by-Hop-Übertragung wird eine µ-Setup-Meldung bei dem genannten Verfahren jedoch immer noch erheblich langsamer als eine Nutzdaten-ATM-Zelle im Rahmen einer aufgebauten Verbindung übermittelt.

Die Aufgabe der vorliegenden Erfindung besteht darin, ein Verfahren zum Verbindungsaufbau für ein Kommunikationsnetz anzugeben, das eine schnelle Übermittlung einer Verbindungsaufbaumeldung erlaubt.

Gelöst wird diese Aufgabe ausgehend vom Oberbegriff des Patentanspruchs 1 durch die kennzeichnenden Merkmale des Patentanspruchs 1.

Vorteilhafte Ausführungsformen und Weiterbildungen der Erfindung sind in den abhängigen Patentansprüchen angegeben.

Das erfindungsgemäße Verfahren erlaubt es Verbindungsaufbaumeldungen mit annähernd der gleichen Geschwindigkeit wie im Rahmen einer aufgebauten Verbindung übertragene Nutzdatenpakete durch ein Kommunikationsnetz zu übermitteln. Damit können die Vorteile eines verbindungsorientierten Übertragungsverfahrens mit dem Vorteil eines sehr schnellen Verbindungsaufbaus kombiniert werden.

Für einen Aufbau geschalteter virtueller Verbindungen (SVC) ergeben sich daraus insbesondere folgende Vorteile:

SVCs können auch bei hohen Geschwindigkeitanforderungen erst bei Bedarf aufgebaut werden, und müssen nicht schon im voraus für alle zu erwartenden Verbindungen erstellt werden. Damit besteht keine Notwendigkeit für ein ansonsten notwendiges, aufwendiges Verwalten von prophylaktisch aufgebauten SVCs.

Es müssen keine geschätzten Übertragungsbandbreiten im voraus reserviert werden, wie dies beispielsweise beim sog. MPOA-(Multiprotocol over ATM), RSVP- (Resource Reservation Protocol) oder MPLS-Verfahren auf direkte oder indirekte Weise notwendig ist.

Es treten im allgemeinen keine Qualitätseinbußen auf, wenn mehrere Datenpaketströme vom selben Ursprungs-LAN zum selben Ziel-LAN (LAN = local area network) in einer gemeinsam genutzten SVC zwischen einem Ursprungs-Router und einem Ziel-Router übermittelt werden.

Es treten im allgemeinen keine Qualitätseinbußen auf, wenn sich von mehreren Netzknoten ausgehende Datenpaketströme baumartig vereinen. Damit kann ein Aufbau einer Mehrpunkt-zu-Punkt-ATM-Verbindung vorzugsweise durch einen Aufbau individuell angeforderter Punkt-zu-Punkt-ATM-SVCs ersetzt werden. Letztere sind insbesondere im Hinblick auf eine einfachere Gebührenabrechnung vorzuziehen.

Ein Ausführungsbeispiel der Erfindung wird nachfolgend anhand der Zeichnung näher erläutert.

Dabei zeigen jeweils in schematischer Darstellung
FIG 1 eine Verbindungsaufbaumeldung gemäß dem Stand der Technik,
FIG 2 ein Kommunikationsnetz mit einer Vielzahl von über Linkleitungen verbundenen Netzknoten,
FIG 3 dasselbe Kommunikationsnetz mit einem aus mehreren Leitwegzweigen zusammengesetzten Leitwegbaum,
FIG 4 einen Leitwegzweig des Leitwegbaumes und
FIG 5 diesem Leitwegzweig untergeordnete Leitwegzweige.

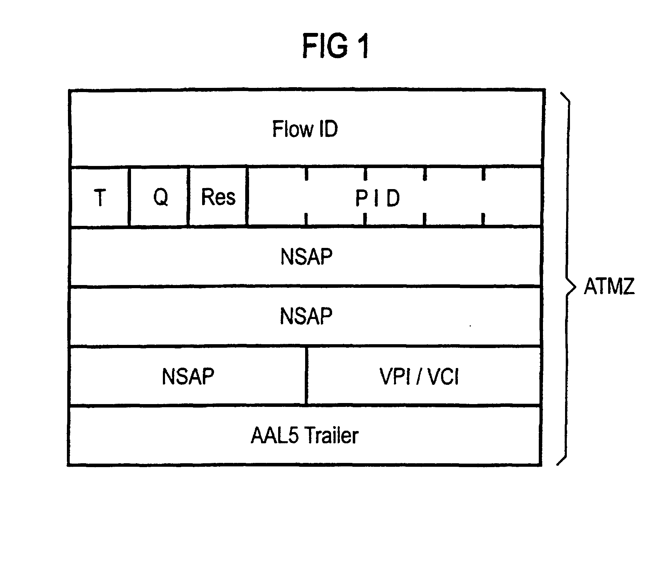

In **Fig 1** ist eine Verbindungsaufbaumeldung für eine ATM-Verbindung in Form einer sog. µ-Setup-Meldung ATMZ gemäß dem Stand der Technik schematisch dargestellt. Die µ-Setup-Meldung ATMZ weist einen 48 Byte großen Nutzdatenbereich auf, der in 6 jeweils 8 Bytes umfassenden Zeilen dargestellt ist. Dabei enthalten das Datenfeld T ein den Typ der ATM-Zelle festlegendes Informationselement, das Datenfeld Q einen Verbindungsparameter mit denen individuelle Eigenschaften der aufzubauenden Verbindung festgelegt werden, die Datenfelder NSAP die Adresse des Ziel-Netzknotens, das Datenfeld PID einen sogenannten "protocol-identifier" und das Datenfeld VPI/VCI einen Vorschlagswert für den sogenannten "virtual path identifier" VPI und den sogenannten "virtual connection identifier" VCI für die im Rahmen der aufzubauenden Nutzdatenverbindung zu übertragenden ATM-Zellen.

Im vorliegenden Ausführungsbeispiel wird eine solche, leicht modifizierte Verbindungsaufbaumeldung ATMZ statt durch Hopby-Hop-Routing erfindungsgemäß mittels eines neuen Routingverfahrens, das im folgenden als Lotsen-Routing bezeichnet wird, übermittelt.

Zu diesem Zweck wird in der µ-Setup-Meldung ATMZ der verhandelbare VPI/VCI-Vorschlag für die Nutzdatenpakete erfindungsgemäß durch eine als Lotsen-VPI/VCI bezeichnete Weiterleitungsinformation für die µ-Setup-Meldung ATMZ selbst ersetzt. Der Lotsen-VPI/VCI wird dabei in jedem Transit-Netzknoten dazu verwendet, eine weiterführende Linkleitung und einen weiterführenden Lotsen-VPI/VCI, die in dem Transit-Netzknoten dem empfangenen Lotsen-VPI/VCI zugeordnet sind, in sehr kurzer Zeit zu bestimmen. Beispielsweise kann durch einen empfangenen Lotsen-VPI/VCI eine entsprechende Switching- oder Umwertetabelle, vorzugsweise eine Hardware-Tabelle, indiziert werden. Auf diese Weise kann die µ-Setup-Meldung ATMZ mit der Geschwindigkeit von Nutzdaten-ATM-Zellen zum jeweiligen Ziel-Netzknoten übermittelt werden.

Vor einer Übermittlung einer µ-Setup-Meldung ATMZ muß ein die µ-Setup-Meldung ATMZ sendender Ursprungs-Netzknoten anhand der Zieladresse NSAP den Ziel-Netzknoten und dann anhand des Ziel-Netzknotens den richtigen Lotsen-VPI/VCI für die erste Übermittlungsteilstrecke zum unmittelbar nachfolgenden Netzknoten bestimmen.

Bevor diese Lotsen-VPI/VCIs bestimmt werden können, müssen erst noch die Leitwege, entlang denen eine µ-Setup-Meldung ATMZ zu einem Ziel-Netzknoten übermittelt wird, bestimmt werden. Diese Leitwege sind im allgemeinen baumartig verzweigt - vergleichbar mit MPTs beim MPLS-Verfahren, allerdings mit dem Unterschied, daß keine Datenströme zu vereinen sind. Die Leitwege für eine Verbindungsaufbaumeldung ATMZ sind in der Regel wesentlich einfachere Gebilde als normale ATM-Nutzdaten-Verbindungen, da nur leitwegspezifische und keine verbindungsspezifischen Informationen eine Rolle spielen (keine Service-Kategorien, Zellraten, usw.). Aus diesem Grund können diese Leitwege auch mit wesentlich einfacheren Mitteln als normale ATM-Nutzdaten-Verbindungen auf- und abgebaut werden, wie im folgenden ausgeführt:

### Aufbau eines baumartig verzweigten Lotsen-VPI/VCI-Leitwegs:

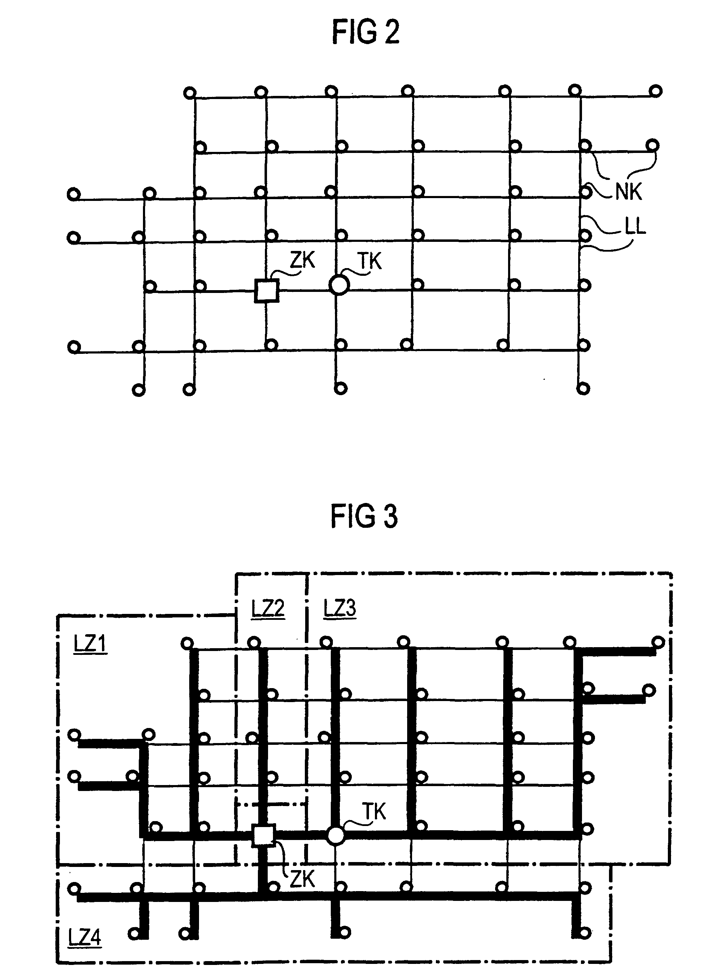

Zur Vereinfachung der Ausführungen wird als Kommunikationsnetz ein hierarchisch flaches sog. PNNI-Netz (Private network node interface for ATM networks) betrachtet. Dieses ist in **Fig 2** schematisch dargestellt. Es besteht aus einer Vielzahl von über Linkleitungen LL verbundenen Netzknoten NK, wobei der Übersichtlichkeit halber nur einige wenige Netzknoten mit Bezugszeichen versehen sind. Ein Netzknoten ZK und ein Netzknoten TK sind dabei besonders gekennzeichnet. Die nachfolgenden, am Beispiel des Netzknoten ZK beschrieben Verfahrensabläufe werden sinngemäß auch von den anderen Netzknoten NK durchgeführt.

Dem Netzknoten ZK werden mittels des sog. PNNI-Routing-Protokolls Informationen über die Netzstruktur des PNNI-Netzes übermittelt. Der Netzknoten ZK initiiert daraufhin mit Hilfe dieser Informationen einen Aufbau von baumartigen Lotsen-VPI/VCI-Verkettungen, d.h. baumartig verzweigten Folgen von Zuordnungen von jeweils ankommenden und abgehenden Lotsen-VPI/VCIs, die alle zu ihm selbst hinführen. Die baumartigen Lotsen-VPI/VCI-Verkettungen entsprechen dabei sog. Spanning-Trees und werden wie folgt gebildet:

Der Netzknoten ZK berechnet zunächst (z.B. mit Hilfe des Dijkstra-Routingalgorithmus) einen Leitwegbaum, der z.B. die in **Fig 3** durch verdickte Linien angedeutete Gestalt habe. Der Leitwegbaum besteht in diesem Fall aus vier verschiedenen Leitwegzweigen LZ1, LZ2, LZ3 und LZ4.

Danach schickt der Netzknoten ZK über die von ihm ausgehenden Linkleitungen je ein Aufbau-Datagramm (z.B. zu definieren im Rahmen von "ATM-Connectionless") an seine Nachbarnetzknoten. Das Aufbau-Datagramm ist nicht zu verwechseln mit einer Verbindungsaufbaumeldung bzw. µ-Setup-Meldung. Die Aufbau-Datagramme dienen dazu, vor einem Aufbau von Verbindungen die Leitwege und Lotsen-VPI/VCI-Verkettungen für alle möglichen Ziel-Netzknoten festzulegen, so daß nachfolgend zu übertragende Verbindungsaufbaumeldungen bzw. µ-Setup-Meldungen sehr schnell mit Hilfe der dann vorliegenden Lotsen-VPI/VCI-Verkettungen übermittelt werden können. Ein Aufbau-Datagramm hat jeweils folgendem Inhalt:
- Datagrammtyp = "Aufbau eines baumartigen Lotsen-VPI/VCI-Leitwegs",
- Lotsen-Zielknoten = ZK, d.h. der Netzknoten ZK selbst (diese Information wird beim Weiterleiten des Aufbau-Datagramms nicht verändert),
- Lotsen-VPI/VCI bezüglich der jeweiligen Linkleitung, über die das Aufbau-Datagramm soeben geschickt wird, vergeben vom aussendenden Knoten ZK und
- Source-Routing-Information. Diese ist abhängig vom das jeweilige Aufbau-Datagramm empfangenden Netzknoten. Für den Netzknoten TK besteht diese Source-Routing-Information z.B. aus allen (PNNI-)Linkleitungen des Leitwegzweigs LZ3 (gegeben per Netzknoten ID + Port ID), ohne die gerade passierte Linkleitung zwischen dem Netzknoten ZK und dem Netzknoten TK, sowie aus die Baumstruktur des Leitwegs beschreibenden Informationselementen.

Durch zusätzliche Informationen kann weiterhin eine Bildung mehrerer Leitwege in Abhängigkeit von vorgebbaren Verbindungsattributen veranlaßt werden.

### Behandlung des Aufbau-Datagramms:

Ein Netzknoten, der ein Aufbau-Datagramm empfängt, ruft eine Abarbeitungsroutine auf, die anhand der empfangenen Source-Routing-Information alle unmittelbar weiterführenden Linkleitungen sowie die über diese jeweils weiterzuleitenden Source-Routing-Informationen des jeweils anschließenden Leitwegzweiges erkennt. Der Netzknoten weist jeder erkannten weiterführenden Linkleitung einen "Fortsetzungs"-Lotsen-VPI/VCI zu und erstellt Einträge für die Switching-Tabelle derart, daß später, wenn eine µ-Setup-Meldung ATMZ zu diesem Netzknoten kommen sollte, er den richtigen Switching-Tabelleneintrag adressieren und auswerten kann, um diese µ-Setup-Meldung ATMZ in Richtung des Lotsen-Zielknotens ZK weiterzuleiten. Diese Tabelleneinträge können weiterhin derart verkettet werden, daß sie später, wenn ein Abbau-Datagramm zum Abbau eines aufgebauten Lotsen-VPI/VCI-Leitwegs aus Richtung des Lotsen-Zielknotens ZK empfangen wird, auf einfache Weise gefunden, zum Weiterleiten des Abbau-Datagramms ausgewertet und schließlich gelöscht werden können.

Im vorliegenden Ausführungsbeispiel empfängt der Netzknoten TK vom Netzknoten ZK eine Source-Routing-Information, die den Leitwegzweig LZ3 beschreibt.

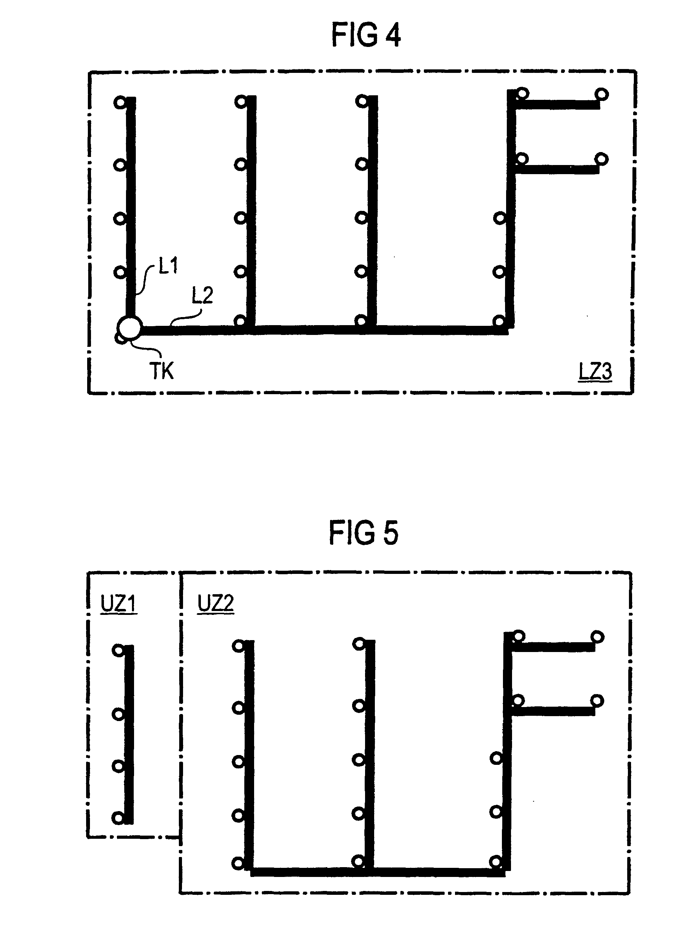

Der Leitwegzweig LZ3 ist in **Fig 4** einzeln dargestellt. Anhand der empfangenen Source-Routing-Information erkennt der Netzknoten TK die von ihm ausgehenden Linkleitungen L1 und L2 als weiterführende Linkleitungen und erkennt, welcher Teil der empfangenen Source-Routing-Information jeweils über die Linkleitung L1 bzw. über die Linkleitung L2 weiterzuleiten ist.

In **Fig 5** sind die sich jeweils an die Linkleitungen L1 und L2 anschließenden Leitwegzweige UZ1 und UZ2 des Leitwegzweiges LZ3 schematisch dargestellt. Vom Netzknoten TK wird entsprechend über die Linkleitung L1 ein den Leitwegzweig UZ1 beschreibender Teil der empfangenen Source-Routing-Information und über die Linkleitung L2 ein den Leitwegzweig UZ2 beschreibender Teil der empfangenen Source-Routing-Information, jeweils innerhalb eines Aufbau-Datagramms übermittelt

Die Auswertung der Source-Routing-Information und des Aufbau-Datagramms wiederholt sich rekursiv in allen das Aufbau-Datagramm nachfolgend empfangenden Netzknoten. Durch dieses Verfahren werden die Source-Routing-Information und das Aufbau-Datagramm schleifenfrei an alle betroffenen Netzknoten gesendet. Anders als beim MPLS-Verfahren sind damit keine Leitwegschleifen zu befürchten.

### Abbau eines baumartig verzweigten Lotsen-VPI/VCI-Leitwegs:

Der Lotsen-Zielknoten ZK veranlaßt den Abbau eines Lotsen-VPI/VCI-Leitwegs, indem er ein Abbau-Datagramm mit folgendem Inhalt über die von ihm ausgehenden Linkleitungen aussendet:
- Datagrammtyp = "Abbau des baumartig verzweigten Lotsen-VPI/VCI-Leitwegs"
- Lotsen-VPI/VCI bezüglich der jeweiligen Linkleitung, über die das Abbau-Datagramm soeben geschickt wird.

### Behandlung des Abbau-Datagramms:

Ein Netzknoten, der ein solches Abbau-Datagramm empfängt, identifiziert anhand des Linkleitung, über die das Abbau-Datagramm empfangen wurde, und anhand des empfangenen Lotsen-VPI/VCI alle diesbezüglichen Einträge seiner Switching-Tabelle. Anhand dieser Einträge bestimmt der Netzknoten die jeweiligen Fortsetzungs-Linkleitungen sowie die jeweiligen Fortsetzungs-Lotsen-VPI/VCIs. Anschließend bildet der Netzknoten die jeweiligen Fortsetzungs-Abbau-Datagramme, löscht die Switching-Tabelleneinträge und gibt schließlich die Fortsetzungs-Lotsen-VPI/VCIs frei.

### Gestalt der Leitwegbäume bzw. Spanning-Trees:

Der in der Zeichnung dargestellte Leitwegbaum wurde unter Zugrundelegung von Informationen über die gesamte Netzstruktur mit dem Optimierungskriterium, von jedem Netzknoten aus jeweils den kürzesten Weg zum Lotsen-Zielknoten ZK anzugeben, bestimmt. Nachfolgend auszusendende µ-Setup-Meldungen ATMZ können damit von jedem Netzknoten als Ursprungs-Netzknoten ausgehen und würden stets auf dem kürzesten Weg zum Lotsen-Zielknoten ZK übermittelt werden.

Häufig gibt es jedoch auch Motive, die für eine andere Leitwegführung sprechen, wie z.B.:
a) eine temporär voll belegte Linkleitung,
b) ein als sog. Non-Transit-Knoten markierter Netzknoten und
c) ein sog. Call-Profil, das es erfordert, daß alle zu passierenden Linkleitungen bestimmte QoS- und/oder Service-Category-Attribute aufweisen.

Motiv a) könnte bewirken, daß von Zeit zu Zeit bestimmte existierende Lotsen-VPI/VCI-Leitwege abgebaut und durch andere neu aufzubauende ersetzt werden müssen.

Motiv c) könnte bewirken, daß ein bestimmter Lotsen-Zielknoten die zu ihm hinführenden Leitwegbäume mehrfach berechnet und dabei jeweils eine Netzstruktur zugrunde legt, bei der die (verbliebenen, nicht "weggeblendeten") Linkleitungen unterschiedlichen QoS- und/oder Service-Category-Attributen genügen. In diesem Fall ist im Aufbau-Datagramm ein Informationselement vorzusehen, das die korrekten QoSund/oder Service-Category-Attribute spezifiziert. Ein beliebiger Ursprungs-Neztknoten kann in diesem Fall µ-Setup-Meldungen mit verschiedenen, jeweils einem Call-Profil zugeordneten Einstiegs-Lotsen-VPI/VCIs zum selben Ziel-Netzknoten senden.

## Patentansprüche

1. Verfahren zum Verbindungsaufbau für ein Kommunikationsnetz mit einer Vielzahl von über Linkleitungen (LL) vernetzten Netzknoten (NK, TK, ZK), bei dem
a) für die Netzknoten (NK, TK, ZK) jeweils zu allen als Verbindungsziel in Frage kommenden Ziel-Netzknoten (ZK) hinführende Leitwege (LZ1,...,LZ4) ermittelt werden,
b) in den Netzknoten (NK, TK, ZK) jeweils anhand der ermittelten Leitwege (LZ1,...,LZ4) eine Zuordnungsvorschrift eingerichtet wird, durch die für jeden in Frage kommenden Ziel-Netzknoten (ZK) eine Weiterleitungsangabe sowohl einer in Richtung dieses Ziel-Netzknotens (ZK) führenden Linkleitung (LL) als auch einer neuen Weiterleitungsangabe zugeordnet wird, und anschließend
c) eine Verbindungsaufbaumeldung von einem Ursprungs-Netzknoten (NK, TK) zu einem Ziel-Netzknoten (ZK) zum Vorbereiten einer nachfolgenden Übertragung von Nutzdaten dergestalt übermittelt wird, daß in einem die Verbindungsaufbaumeldung empfangenden Netzknoten (NK, TK)
- eine in der Verbindungsaufbaumeldung enthaltene Weiterleitungsangabe ausgelesen wird, und
- unter Verwendung der Zuordnungsvorschrift die Verbindungsaufbaumeldung über eine dieser Weiterleitungsangabe in diesem Netzknoten (NK, TK) zugeordnete Linkleitung (LL) nach Ersetzung dieser Weiterleitungsangabe durch die dieser zugeordnete, neue Weiterleitungsangabe weiterübermittelt wird.

2. Verfahren nach Anspruch 1,
**dadurch gekennzeichnet,**
**daß** in einem Netzknoten (TK, NK, ZK) eine einer leitwegspezifischen Weiterleitungsangabe zugeordnete neue leitwegspezifische Weiterleitungsangabe durch Zugriff auf eine Umwertetabelle ermittelt wird, in der für jede zulässige leitwegspezifische Weiterleitungsangabe eine neue leitwegspezifische Weiterleitungsangabe enthalten ist.

3. Verfahren nach Anspruch 2,
**dadurch gekennzeichnet,**
**daß** beim Zugriff auf die Umwertetabelle die zulässige leitwegspezifische Weiterleitungsangabe als Tabellenindex benutzt wird.

4. Verfahren nach Anspruch 2 oder 3,
**dadurch gekennzeichnet,**
**daß** in einem Netzknoten (NK, TK, ZK) eine von mehreren in diesem Netzknoten (NK, TK, ZK) eingerichteten Umwertetabellen abhängig von einem in der Verbindungsaufbaumeldung enthaltenen Verbindungsparameter selektiert wird, und
eine neue leitwegspezifischen Weiterleitungsangabe anhand der selektierten Umwertetabelle ermittelt wird.

5. Verfahren nach einem der vorhergehenden Ansprüche,
**dadurch gekennzeichnet,**
**daß** jeweils die in einem Netzknoten (NK, TK, ZK) einer Weiterleitungsangabe zugeordnete, neue Weiterleitungsangabe in dem über die ebenfalls zugeordnete, in Richtung des jeweiligen Ziel-Netzknotens (ZK) führende Linkleitung angeschlossenen Netzknoten als Weiterleitungsangabe einer in Richtung desselben Ziel-Netzknotens (ZK) führenden Linkleitung zugeordnet ist.

6. Verfahren nach einem der vorhergehenden Ansprüche,
**dadurch gekennzeichnet,**
**daß** die Zuordnungsvorschrift in jedem Netzknoten (NK, TK, ZK) in Abhängigkeit von dort vorhandenen Informationen über die Struktur des Kommunikationsnetzes ermittelt und eingerichtet wird.

7. Verfahren nach einem der vorhergehenden Ansprüche,
**dadurch gekennzeichnet,**
**daß** in einem Netzknoten (NK, TK, ZK) eine einer Weiterleitungsangabe zugeordnete Linkleitung (LL) durch Zugriff auf eine Linktabelle ermittelt wird, in der für jede zulässige Weiterleitungsangabe eine eine zugeordnete Linkleitung (LL) identifizierende Information enthalten ist.

8. Verfahren nach Anspruch 7,
**dadurch gekennzeichnet,**
**daß** beim Zugriff auf die Linktabelle die zulässige Weiterleitungsangabe als Tabellenindex benutzt wird.

9. Verfahren nach Anspruch 7 oder 8,
**dadurch gekennzeichnet,**
**daß** in einem Netzknoten (NK, TK, ZK) eine von mehreren in diesem Netzknoten (NK, TK, ZK) eingerichteten Linktabellen abhängig von einem in der Verbindungsaufbaumeldung enthaltenen Verbindungsparameter selektiert wird, und
eine zugeordnete Linkleitung (LL) anhand der selektierten Umwertetabelle ermittelt wird.

10. Verfahren nach einem der vorhergehenden Ansprüche,
**dadurch gekennzeichnet,**
**daß** der Verbindungsaufbau in einem ATM-Netz erfolgt.

11. Verfahren nach Anspruch 10,
**dadurch gekennzeichnet,**
**daß** als Verbindungsaufbaumeldung eine einzelne ATM-Zelle übermittelt wird.

## Claims

1. Method for setting up a connection for a communication network comprising a multiplicity of network nodes (NK, TK, ZK) networked via links (LL), in which
a) routes (LZ1, ..., LZ4) in each case leading to all destination network nodes (ZK) in question as the connection destination are determined for the network nodes (NK, TK, ZK),
b) in the network nodes (NK, TK, ZK), an association rule is in each case set up by means of the routes determined (LZ1, ..., LZ4), by means of which rule a forwarding information item is associated both with a link (LL) leading in the direction of this destination node (ZK) and with a new forwarding information item for each destination network node (ZK) in question, and then
c) a setup message is transmitted from an originating network node (NK, TK) to a destination network node (ZK) for preparing a subsequent transmission of useful data, in such a manner that, in a network node (NK, TK) receiving the setup message,
- a forwarding information item contained in the setup message is read out, and
- using the association rule, the setup message is forwarded via a link (LL) associated with this forwarding information item in this network node (NK, TK), after replacement of this forwarding information item by the new forwarding information item associated with the former information item.

2. Method according to Claim 1,
**characterized in that**,
in a network node (TK, NK, ZK), a new route-specific forwarding information item to a route-specific forwarding information item is determined by access to a translation table which contains a new route-specific forwarding information item for each permissible route-specific forwarding information item.

3. Method according to Claim 2,
**characterized in that**
during the access to the translation table, the permissible route-specific forwarding information item is used as table index.

4. Method according to Claim 2 or 3,
**characterized in that**,
in a network node (NK, TK, ZK), one of a number of translation tables set up in this network node (NK, TK, ZK) is selected depending on a connection parameter contained in the setup message, and
a new route-specific forwarding information item is determined by means of the selected translation table.

5. Method according to one of the preceding claims,
**characterized in that**
the new forwarding information item allocated to a forwarding information item in a network node (NK, TK, ZK) is in each case, in the network node connected via the link also allocated and leading in the direction of the respective destination node (ZK), as forwarding information with a link leading in the direction of the same destination network node (ZK).

6. Method according to one of the preceding claims,
**characterized in that**
the association rule is determined and set up in each network node (NK, TK, ZK) as a function of above information on the structure of the communication network which exists there.

7. Method according to one of the preceding claims,
**characterized in that**
in a network node (NK, TK, ZK), a link (LL) allocated to a forwarding information item is determined by access to a link table in which an information item identifying an associated link (LL) is contained for each permissible forwarding information item.

8. Method according to Claim 7,
**characterized in that**,
during the access to the link table, the permissible forwarding information item is used as a table index.

9. Method according to Claim 7 or 8,
**characterized in that**,
in a network node (NK, TK, ZK), one of a number of link tables set up in this network node (NK, TK, ZK) is selected as a function of a connection parameter contained in the setup message, and
an associated link (LL) is determined by means of the selected translation table.

10. Method according to one of the preceding claims,
**characterized in that**
the connection setup takes place in an ATM network.

11. Method according to Claim 10,
**characterized in that**
a single ATM cell is transmitted as the setup message.

## Revendications

1. Procédé pour établir une connexion pour un réseau de communication comprenant une pluralité de noeuds de réseau (NK, TK, ZK) reliés en réseau par le biais de lignes de jonction (LL), dans lequel
a) on détermine, pour les noeuds de réseau (NK, TK, ZK), les routes (LZ1, ..., LZ4) menant à chaque fois à tous les noeuds de réseau cibles (ZK) entrant en ligne de compte en tant que cible de connexion,
b) une règle d'affectation est établie à chaque fois dans les noeuds de réseau (NK, TK, ZK) sur la base des routes déterminées (LZ1, ..., LZ4), règle grâce à laquelle une indication de transmission est associée, pour chaque noeud de réseau cible (ZK) entrant en ligne de compte, non seulement à une ligne de jonction (LL) menant en direction de ce noeud de réseau cible (ZK) mais également à une nouvelle indication de transmission, puis
c) un message d'établissement de connexion est transmis d'un noeud de réseau d'origine (NK, TK) à un noeud de réseau cible (ZK) pour préparer une transmission consécutive de données utiles, de manière à ce que, dans un noeud de réseau (NK, TK) recevant le message d'établissement de connexion,
- une indication de transmission contenue dans le message d'établissement de connexion soit lue et
- à ce que, en utilisant la règle d'affectation, le message d'établissement de connexion soit retransmis par le biais d'une ligne de jonction (LL) associée à cette indication de transmission dans ce noeud de réseau (NK, TK), après remplacement de cette indication de transmission par la nouvelle indication de transmission associée à celle-ci.

2. Procédé selon la revendication 1, **caractérisé en ce que**, dans un noeud de réseau (TK, NK, ZK), une nouvelle indication de transmission spécifique à une route associée à une indication de transmission spécifique à une route est déterminée par l'accès à une table de traduction qui contient, pour chaque indication de transmission spécifique à une route autorisée, une nouvelle indication de transmission spécifique à une route.

3. Procédé selon la revendication 2, **caractérisé en ce que**, pour l'accès à la table de traduction, on utilise en tant qu'index de table l'indication de transmission spécifique à une route autorisée.

4. Procédé selon la revendication 2 ou 3, **caractérisé en ce que**, dans un noeud de réseau (NK, TK, ZK), une table de traduction parmi plusieurs tables de traduction établies dans ce noeud de réseau (NK, TK, ZK) est sélectionnée en fonction d'un paramètre de connexion contenu dans le message d'établissement de connexion et une nouvelle indication de transmission spécifique à une route est déterminée sur la base de la table de traduction sélectionnée.

5. Procédé selon l'une des revendications précédentes, **caractérisé en ce que** la nouvelle indication de transmission associée à une indication de transmission dans un noeud de réseau (NK, TK, ZK) est associée à chaque fois en tant qu'indication de transmission, dans le noeud de réseau connecté par le biais de la ligne de jonction également associée menant en direction du noeud de réseau cible respectif (ZK), à une ligne de jonction menant en direction de ce même noeud de réseau cible (ZK).

6. Procédé selon l'une des revendications précédentes, **caractérisé en ce que** la règle d'affectation est déterminée et établie dans chaque noeud de réseau (NK, TK, ZK) en fonction d'informations présentes dans celui-ci relatives à la structure du réseau de communication.

7. Procédé selon l'une des revendications précédentes, **caractérisé en ce que**, dans un noeud de réseau (NK, TK, ZK), une ligne de jonction (LL) associée à une indication de transmission est déterminée grâce à l'accès à une table de jonction qui contient, pour chaque indication de transmission autorisée, une information identifiant une ligne de jonction (LL) associée.

8. Procédé selon la revendication 7, **caractérisé en ce que** l'on utilise l'indication de transmission autorisée en tant qu'index de table pour l'accès à la table de jonction.

9. Procédé selon la revendication 7 ou 8, **caractérisé en ce que**, dans un noeud de réseau (NK, TK, ZK), une table de jonction parmi plusieurs tables de jonction établies dans ce noeud de réseau (NK, TK, ZK) est sélectionnée en fonction d'un paramètre de connexion contenu dans le message d'établissement de connexion et une ligne de jonction associée (LL) est déterminée sur la base de la table de traduction sélectionnée.

10. Procédé selon l'une des revendications précédentes, **caractérisé en ce que** l'établissement de la connexion se fait dans un réseau ATM.

11. Procédé selon la revendication 10, **caractérisé en ce qu'**une cellule ATM individuelle est transmise en tant que message d'établissement de connexion.
